# EUROPEAN PATENT SPECIFICATION

(11) **EP 2 669 048 B1**
(45) Date of publication and mention of the grant of the patent: **20.05.2020**
(21) Application number: 11856880.7
(22) Date of filing: 29.09.2011
(51) Int. Cl.: B24B 57/02, C01F 17/00

(54) **METHOD FOR RECOVERING ABRASIVE MATERIAL COMPONENT FROM USED ABRASIVE MATERIAL SLURRY, AND CERIUM OXIDE RECOVERED THROUGH METHOD**
VERFAHREN ZUR RÜCKGEWINNUNG VON SCHLEIFMATERIALKOMPONENTEN AUS GEBRAUCHTER SCHLEIFMATERIALSUSPENSION UND AUS DIESEM VERFAHREN RÜCKGEWONNENES CEROXID
PROCÉDÉ DE RÉCUPÉRATION D'UN CONSTITUANT EN MATÉRIAU ABRASIF À PARTIR D'UNE BOUILLIE USAGÉE DE MATÉRIAU ABRASIF, ET OXYDE DE CÉRIUM RÉCUPÉRÉ PAR LEDIT PROCÉDÉ

(30) Priority: 24.01.2011 JP 2011011759
(43) Date of publication of application: 04.12.2013
(73) Proprietor: Konica Minolta, Inc., Tokyo 100-7015 (JP)
(72) Inventor: TAKAHASHI, Atsushi, Hachioji-shi Tokyo 192-8505 (JP); NAGAI, Yuuki, Hachioji-shi Tokyo 192-8505 (JP); MAEZAWA, Akihiro, Hachioji-shi Tokyo 192-8505 (JP)
(74) Representative: Henkel & Partner mbB
(86) International application number: PCT/JP2011/072476
(87) International publication number: WO 2012/101868

(56) References cited:
- JP-A- 2000 254 659
- JP-A- 2004 216 352
- JP-A- 2004 237 163

## Description

### Field of the Invention

The present invention relates to a method for recovering an abrasive component from used slurry of an abrasive, the abrasive including cerium oxide, and cerium oxide recovered through the method.

### Background Art

As an abrasive for finely polishing an optical glass or crystal oscillator in a finishing process, a rare-earth oxide composed of cerium oxide as a main component and further added with lanthanum oxide, neodymium oxide or praseodymium oxide has been used. Rare-earth elements used as a main component of an abrasive are eccentrically present in the world, and thus Japan totally depends on imports for rare-earth elements, which may cause anxiety about stable supply of rare-earth elements. Such an abrasive is used in great quantities and further disposed after use because it is difficult to separate an abrasive from a component derived from a polished object. Therefore, there are also problems in terms of environmental burden and waste cost.

Given the above, it has been recognized as a significant challenge in recent years to save rare-earth elements by efficiently recovering element(s) of which an abrasive is mainly composed.

As a method for recovering an abrasive component, Patent document 1 discloses a method including steps of adding electrolyte(s) to a used abrasive, aggregating and precipitating the used abrasive, dissolving a component derived from a polished substrate, and separating a solid component from a liquid component. As the electrolytes, a hydroxylated alkali metal, carboxylated alkali metal, alkali metal salt and ammonium salt are used.

In addition, Patent document 2 discloses a method for recovering a fine abrasive, the method including steps of mixing a solution of sodium hydroxide or potassium hydroxide with a used abrasive, separating a solid component from a liquid component, and sieving a solid component.

Patent document 3 discloses a method for separating and removing an aggregated component such as silica in slurry, the method including steps of adding sulfonic acid to a used abrasive, applying heat thereto, and dissolving a rare earth element and rare metal.

The methods disclosed by the above Patent documents 1 to 3 employ acid or alkali to dissolve an abrasive component or a component derived from a polished object to separate the abrasive component from the component derived from the polished object, and thus, recovered cerium oxide or waste liquid needs to be neutralized after separating the abrasive component from the component derived from the polished object. Hence, these methods cost too much.

### Prior Art Documents

### Patent Documents

Patent document 1: Japanese Laid-open Application Publication No. Hei06-254764
Patent document 2: Japanese Laid-open Application Publication No. Hei11-090825
Patent document 3: Japanese Laid-open Application Publication No. Hei11-050168

JP-A-2000 254 659 discloses a method for recovery of an abrasive component in a used slurry of a silica-containing abrasive employed for mechanically polishing a wafer in semi-conductor manufacturing. The used slurry contains fine silica particles SiO2 as the abrasive. The used slurry also contains residual particles from the polished semiconductor component, such as silicon Si particles. Accordingly, silica particles Si02 are to be aggregated and recovered with this method.

### Summary of the Invention

### Problems to be Solved by the Invention

The present invention is made given the above problems and situations, and provides a method for recovering an abrasive component achieving easy treatment of a recovered abrasive component and waste liquid for a method for recovering an abrasive component from used slurry of an abrasive, the abrasive including cerium oxide as a main component thereof, and provides cerium oxide recovered by this novel recovering method.

### Means for Solving Problems

The present inventors have earnestly studied for solving the above problems and succeeded to control dispersibility of cerium oxide as a main component of an abrasive in slurry by changing a state of cerium oxide from "being difficult to precipitate" to "being easy to precipitate" utilizing salting-out effect (aggregation effect). On the other hand, dispersibility of a glass component hardly changes. Accordingly, only cerium oxide precipitates, and thus cerium oxide can be separated from a glass component. The present invention has been thus achieved.

The above problems are solved by the following ways of the present invention as defined by Claim 1.

### Effects of the Invention

The above-described ways of the present invention enable separation of an abrasive component from a component derived from a polished object without using plenty of an acid or alkali compound in a method for recovering an abrasive component from used slurry of an abrasive, the abrasive including cerium oxide as a main component thereof . In addition, the above-described ways of the present invention provide a method for recovering an abrasive component achieving easy treatment of a recovered abrasive component and waste liquid because conditions for separating an abrasive component from a component derived from a polished object are milder than those disclosed by Prior art documents. Further, the above-described ways of the present invention also provide cerium oxide recovered by this novel recovering method. Embodiments for Carrying Out the Invention

The method for recovering an abrasive component from used slurry of an abrasive of the present invention is a method according to Claim 1.

As embodiments of the present invention, in view of benefiting advantages of the present invention, the magnesium salt is preferably magnesium chloride or magnesium sulfate. The magnesium salt is added to the used slurry of an abrasive so that a concentration of the magnesium salt in the used slurry of the abrasive ranges from 5 to 26 mmol/L.

The method for recovering an abrasive component from used slurry of an abrasive is used for recovering cerium oxide.

Hereinafter, the present invention and its elements and configurations, and embodiments and examples for carrying out the present invention will be described in detail. Numeral ranges described in the present application include the former and the latter values as the maximum and the minimum value of the ranges.

### (Used Slurry of Abrasive)

The method for recovering an abrasive component of the present invention is characterized by being the method for recovering an abrasive component from used slurry of an abrasive, the abrasive including cerium oxide.

The method for recovering an abrasive component of the present invention is a method characterized by including steps of adding a magnesium salt to used slurry of an abrasive, aggregating and precipitating the abrasive component from the used slurry of the abrasive including the abrasive component and a component derived from a polished object, separating a solid component from a liquid component, and recovering the abrasive component.

The method of the present invention is for recovering an abrasive component from used slurry of an abrasive, the abrasive used as an abrasive for optical glasses, various glass substrates and the like. Used slurry of an abrasive disperses preferably 1 to 10% abrasive and a glass component with respect to water by mass, and more preferably 2 to 3% abrasive and a glass component with respect to water by mass.

### (Aggregating and Precipitating Agent)

The present invention is characterized by including steps of aggregating and precipitating an abrasive component from used slurry of an abrasive including the abrasive component and a component derived from a polished object, separating a solid component from a liquid component, and recovering an abrasive component.

The present invention is characterized in that a magnesium salt is added as an aggregating and precipitating agent for aggregation and precipitation. The magnesium salt is not particularly limited as long as the magnesium salt functions as an electrolyte and is exemplified by magnesium chloride, magnesium bromide, magnesium iodide, magnesium oxide, magnesium sulfide, magnesium hydroxide, magnesium sulfate, magnesium acetate and the like. Preferable magnesium salts among these examples are magnesium chloride, magnesium bromide, magnesium iodide, magnesium sulfate and magnesium acetate, all of which are easy to dissolve in water. Particularly preferable magnesium salts are magnesium chloride and magnesium sulfate because, in the case of using these magnesium salts, change in pH of a solution is small and a precipitated abrasive and waste liquid are easy to treat.

The magnesium salt is added to the used slurry of an abrasive so that a concentration of the magnesium salt in the used slurry of the abrasive ranges from 5 to 26 mmol/L.

### Examples

Hereinafter, the present invention is described with reference to Examples, but the present invention is not limited thereto.

First, multiple kinds of salts were examined for their capabilities of aggregating a used abrasive. Thereafter, salts that were proved as having high capabilities of aggregating a used abrasive were examined for their capabilities of separating a glass component.

### <Used Slurry of Abrasive>

"Used slurry of an abrasive" used in the following examinations was slurry of an abrasive used for treating glass substrates for a hard disc. In this slurry, 2 to 3% abrasive and a glass component with respect to water by mass were dispersed.

### <Salts Used in Examinations>

Sodium salt: sodium chloride, sodium carbonate, sodium sulfate
Calcium salt: calcium chloride
Lithium salt: lithium chloride
Potassium salt: potassium chloride, potassium carbonate, potassium iodide
Magnesium salt: magnesium chloride, magnesium sulfate

Details of the above salts used in the examinations are shown in Table 1.

**[Table 1]**

| Salt (Reagent) | Manufacturer | Grade | Purity (%) | Cat. No. |
|---|---|---|---|---|
| Sodium chloride | Kanto Chemical Co., Inc. | G (special grade) | 99.5 | 37144-00 |
| Sodium carbonate | Wako Pure Chemical Industries | Wako 1st grade | 99.5 | 196-01595 |
| Sodium sulfate decahydrate | Kanto Chemical Co., Inc. | G | 98.0-102.0 | 37279-00 |
| Calcium chloride | Kanto Chemical Co., Inc. | G | 95.0 | 07057-00 |
| Lithium chloride | Kanto Chemical Co., Inc. | E (Cica 1st grade (high grade)) | 99.0 | 24122-20 |
| Potassium chloride | Kanto Chemical Co., Inc. | G | 99.5 | 32326-00 |
| Potassium carbonate | Kanto Chemical Co., Inc. | G | 99.5 | 32323-00 |
| Potassium iodide | Kanto Chemical Co., Inc. | G | 99.5 | 32351-20 |
| Magnesium chloride hexahydrate | Kanto Chemical Co., Inc. | G | 99.0 | 25009-00 |
| Magnesium sulfate heptahydrate | Kanto Chemical Co., Inc. | G | 99.5 | 25034-00 |

### (1) Examination of Capability of Aggregating Used Abrasive

A solution of each salt listed above was gradually added to the used slurry of the abrasive. A concentration at which aggregation and precipitation began was obtained for each solution.

### <Method>

30 ml of the used slurry of the abrasive was put in a centrifuge tube, and 1 mol/L solution of each salt listed above was gradually added to the used slurry of the abrasive in the centrifuge tube. An amount and concentration at which aggregation and precipitation began were obtained.

Beginning of aggregation and precipitation was determined by confirming that an interface formed between precipitates and supernatant in a 10-minute still standing after the addition and stirring.

Results of the above examination are shown in Table 2 below. In Table 2, respective amounts of the added solutions and respective concentrations as to the solutions are shown, and "X" represents that no aggregation and precipitation was observed when 3 ml of the solution had been added to the used slurry of the abrasive.

**[Table 2]**

| Added salt | Amount of added solution | Concentration in slurry |
|---|---|---|
| Sodium chloride | × | × |
| Sodium carbonate | × | × |
| Sodium sulfate | × | × |
| Calcium chloride | 0.750 ml | 24 mmol/L |
| Lithium chloride | × | × |
| Potassium chloride | × | × |
| Potassium carbonate | 3 ml | 91 mmol/L |
| Potassium iodide | × | × |
| Magnesium chloride | 0.200 ml | 7 mmol/L |
| Magnesium sulfate | 0.200 ml | 7 mmol/L |

| | | |
|---|---|---|
| (note) × : no aggregation and precipitation was observed when 3 ml of the solution had been added to the used slurry of the abrasive | | |

### (2) Examination of Capability of Separating Glass Component

A sample taken from each used slurry of the abrasive where precipitates were observed was separated into the precipitates and supernatant. The supernatant was subjected to component analysis with an inductively coupled plasma (ICP) atomic emission spectrometer. The precipitates were determined as cerium oxide if the concentration of cerium decreased and the concentration of silicon did not change compared to the untreated slurry.

### <Component Analysis by ICP Atomic Emission Spectroscopy>

The supernatant which was separated through centrifuge was subjected to measurement of the concentrations of a cerium component and a glass component (Si component) using ICP, and measured concentrations were compared with those of the untreated used slurry of the abrasive (the used slurry of the abrasive to which no additive was added). Specifically, this measurement was conducted according to the following procedure .
(a) 1 ml of the supernatant was collected from the supernatant being stirred with a stirrer or the like
(b) 5 ml of hydrofluoric acid for use in atomic absorption spectroscopy was added to the collected supernatant
(c) ultrasonic dispersion was conducted so as to elute silica
(d) the resulting supernatant was made stand still for 30 minutes at room temperature
(e) ultrapure water was added to the resulting supernatant to obtain the total volume of 50 ml

Hereinafter, a sample solution obtained through the above procedure is referred to as a "sample solution A".

### <<Quantitative Determination of Si and Mg>>

(a) the sample solution A was filtrated with a membrane filter (hydrophilic PTFE)
(b) the obtained filtrate was subjected to measurement with an inductively coupled plasma (ICP) atomic emission spectrometer (ICP-AES)
(c) Si was quantified using standard addition method, and Mg was quantified using matrix-matched calibration curve method

<<Quantitative Determination of Ce>>
(a) the sample solution A was brought into a well-dispersing state, and 5 ml of the sample solution A was collected therefrom
(b) 5 ml of highly-pure sulfonic acid was added to the collected solution to dissolve Ce
(c) ultrapure water was added to the resulting solution to obtain the total volume of 50 ml
(d) the resulting solution was adequately diluted with ultrapure water and then subjected to measurement with an ICP-AES
(e) Ce was quantified using matrix-matched calibration curve method

### <<Instrument>>

The measurement is conducted with SPS3520UV, which is an ICP-AES from SII Nanotechnology Inc., by hydrofluoric acid injection system.

Results of the component analysis are shown in Table 3.

**[Table 3]**

| Sample | Si Concentration (mg/L) | Ce Concentration (mg/L) |
|---|---|---|
| Untreated slurry | 1060 | 5400 |
| Supernatant (Magnesium chloride) | 941 | 54 |
| Supernatant (Magnesium sulfate) | 952 | 62 |
| Supernatant (Calcium chloride) | 63 | 5 |

Aggregation and precipitation of a glass component were clearly observed in the sample to which calcium chloride was added, whereas aggregation and precipitation of a glass component were hardly observed in the samples to which magnesium salts were added.

### (3) Change in Separation Capability According to Concentration of Magnesium Salt

30 ml of the used slurry of the abrasive was put in a centrifuge tube, and 1 mol/L aqueous solution of magnesium chloride was gradually added in an amount as listed in Table 4 to the used slurry of the abrasive in the centrifuge tube, and then the resulting solution was stirred followed by still standing for 10 minutes. Each sample was separated into precipitates and supernatant. Each supernatant was subjected to component analysis with an ICP atomic emission spectrometer. Results of the component analysis are shown in Table 4.

**[Table 4]**

| Amount of added magnesium chloride (ml) | Concentration in slurry (mmol/L) | Supernatant (magnesium chloride) | |
|---|---|---|---|
| | | Si Concentration (mg/L) | Ce Concentration (mg/L) |
| 0.100 | 3 | 970 | 985 |
| 0.150 | 5 | 963 | 65 |
| 0.200 | 7 | 952 | 62 |
| 0.400 | 13 | 955 | 64 |
| 0.750 | 26 | 960 | 70 |
| 1.000 | 32 | 76 | 92 |

As shown in Table 4, cerium oxide and a glass component can be efficiently separated from each other when the concentration of magnesium ion in the slurry ranges from 5 to 26 mmol/L.

As evident from the above results, treatment with a magnesium salt is effective for separating cerium oxide from a glass component.

### Industrial Applicability

The present invention is applicable to technical fields where an abrasive containing cerium oxide is used in a finishing step for polishing optical glasses, crystal oscillators or the like.

## Claims

1. A method for recovering a cerium oxide-containing abrasive component from a used slurry of an abrasive, the abrasive including cerium oxide, the method comprising:
adding a magnesium salt to the used slurry of the abrasive so that the concentration of the magnesium salt in the used slurry of the abrasive ranges from 5 to 26 mmol/L;
aggregating and precipitating the cerium oxide-containing abrasive component from the used slurry of the abrasive including the cerium oxide-containing abrasive component and a glass component derived from a polished object;
separating a solid component from a liquid component; and
recovering the cerium oxide-containing abrasive component.

2. The method of claim 1, wherein the magnesium salt is magnesium chloride or magnesium sulfate.

## Patentansprüche

1. Verfahren zur Rückgewinnung einer Ceroxid-haltigen Schleifmittelkomponente aus einer gebrauchten Schleifmittelaufschlämmung, wobei das Schleifmittel Ceroxid beinhaltet und das Verfahren umfasst:
Hinzufügen eines Magnesiumsalzes zu der gebrauchten Schleifmittelaufschlämmung, so dass die Konzentration des Magnesiumsalzes in der gebrauchten Schleifmittelaufschlämmung im Bereich von 5 bis 26 mmol/L liegt;
Aggregieren und Ausfällen der Ceroxid-haltigen Schleifmittelkomponente aus der gebrauchten Schleifmittelaufschlämmung, welche die Ceroxid-haltige Schleifmittelkomponente und eine von einem polierten Objekt stammende Glaskomponente beinhaltet;
Abtrennen einer Feststoffkomponente von einer Flüssigkomponente; und
Zurückgewinnen der Ceroxid-haltigen Schleifmittelkomponente.

2. Verfahren gemäß Anspruch 1, wobei es sich bei dem Magnesiumsalz um Magnesiumchlorid oder Magnesiumsulfat handelt.

## Revendications

1. Procédé de récupération d'un composant abrasif contenant de l'oxyde de cérium à partir d'une suspension épaisse usagée d'un abrasif, l'abrasif comportant de l'oxyde de cérium, le procédé comprenant :
l'ajout d'un sel de magnésium à la suspension épaisse usagée de l'abrasif, de sorte que la concentration du sel de magnésium dans la boue usagée de l'abrasif figure dans une plage allant de 5 à 26 mmol/L ;
l'agrégation et la précipitation du composant abrasif contenant de l'oxyde de cérium, à partir de la suspension épaisse usagée de l'abrasif comportant le composant abrasif contenant de l'oxyde de cérium et d'un composant de verre dérivé d'un objet poli ;
la séparation d'un composant solide à partir d'un composant liquide ; et
la récupération du composant abrasif contenant de l'oxyde de cérium.

2. Procédé selon la revendication 1, dans lequel le sel de magnésium est du chlorure de magnésium ou du sulfate de magnésium.
